# EUROPÄISCHE PATENTSCHRIFT

(11) **EP 3 101 441 B1**
(45) Veröffentlichungstag und Bekanntmachung des Hinweises auf die Patenterteilung: **16.05.2018**
(21) Anmeldenummer: 15001652.5
(22) Anmeldetag: 03.06.2015
(51) Int. Cl.: G01S 7/521

(54) **ULTRASCHALLWANDLER**
ULTRASOUND CONVERTER
CONVERTISSEUR D'ULTRASONS

(43) Veröffentlichungstag der Anmeldung: 07.12.2016
(73) Patentinhaber: Pepperl + Fuchs GmbH, 68307 Mannheim (DE)
(72) Erfinder: ZIMMERMANN, Stefan, 67134 Birkenheide (DE)
(74) Vertreter: Koch Müller Patentanwaltsgesellschaft mbH

(56) Entgegenhaltungen:
- EP-A2- 1 282 174
- DE-A1- 4 215 271
- DE-U1- 29 611 678
- US-A- 4 190 783
- US-A- 4 368 400
- US-A1- 2010 231 093

## Beschreibung

Die Erfindung betrifft einen Ultraschallwandler.

Aus der DE 10 2008 055 116 A1 ist ein Ultraschallwandler mit einem Gehäuse und mit einen Wandlerelement und einem Koppelelement bekannt. Ferner sind aus der der DE 10 2007 062 460 A1 und der EP 1 282 174 A2 Ultraschallsensoren bekannt. Aus der DE 296 11 678 U1 ist ein gegen elektromagnetische Störeinflüsse abgeschirmter Ultraschallsensor bekannt.

Vor diesem Hintergrund besteht die Aufgabe der Erfindung darin, eine Vorrichtung anzugeben, die den Stand der Technik weiterbildet.

Die Aufgabe wird durch einen Ultraschallwandler mit den Merkmalen des Patentanspruchs 1 gelöst. Vorteilhafte Ausgestaltungen der Erfindung sind Gegenstand von Unteransprüchen.

Gemäß dem Gegenstand der Erfindung / des Verfahrens wird ein Ultraschallwandler bereitgestellt, aufweisend ein piezoelektrisches Wandlerelement mit einer Oberseite und einer Unterseite, und weiter aufweisend ein becherförmiges Gehäuse, mit einer Oberseite und einer nahezu geschlossenen Unterseite, oder zylinderförmiges Gehäuse mit einer im Wesentlichen offenen Unterseite, wobei an der Oberseite eine Öffnung ausgebildet ist, und aufweisend ein Koppelelement mit einer Vorderseite und einer Rückseite, wobei die Rückseite des Koppelelements mit der Oberseite des Wandlerelements akustisch verkoppelt ist, um in einem Sendemodus die mittels des Wandlerelements erzeugten Ultraschallwellen an die Umgebung auszukoppeln oder um in einem Empfangsmodus die aus der Umgebung von dem Koppelelement empfangenen Ultraschallwellen an das Wandlerelements weiterzuleiten.

Ferner sind das Wandlerelement und das Koppelelement in dem Gehäuse angeordnet und der Ultraschallwandler weist eine erste Elektrode und eine zweite Elektrode auf, wobei die erste Elektrode mit einer an der Unterseite des Wandlerelements ausgebildeten Kontaktfläche verschaltet ist und wobei das Wandlerelement in einer becherartigen Abschirmvorrichtung aus einem metallisch leitfähigen Material angeordnet ist und die Öffnung der Abschirmvorrichtung mit einem metallischen leitfähigen Gitter überspannt ist, so dass die Abschirmvorrichtung und das Gitter einen Faraday'schen Käfig ausbilden, und das Gitter zwischen der Oberseite des Wandlerelements und der Rückseite des Koppelelements ausgebildet ist, und zwischen dem Gehäuse und der Abschirmvorrichtung ein Spalt ausgebildet und das Gehäuse von der Abschirmvorrichtung akustisch entkoppelt ist.

Es sei angemerkt, dass das Wandlerelement vollständig in dem Faraday'schen Käfig angeordnet Ist und das Wandlerelement trotz dem Gitter mit dem Koppelelement akustisch stark verkoppelt ist, um eine hohe Effizienz des Ultraschallwandler zu erreichen. Es versteht sich, dass das Koppelelement in dem Sendemodus erzeugten Ultraschallwellen an die Umgebung, beispielsweise Luft, auskoppelt und in dem Empfangsmodus die aufgefangenen Ultraschallwellen zu dem Wandlerelement weiterleitet. In dem Sendemodus wird das Wandlerelement mit einer Wechselspannung bis zu mehreren MHz beaufschlagt, während in dem Empfangsmodus das Wandlerelement eine Wechselspannung erzeugt. Des Weiteren versteht es sich, dass der Faraday'sche Käfig elektrisch mit einem Bezugspotential, insbesondere mit einer Massepotential verschaltet ist.

Auch sei angemerkt, dass das Gehäuse aus einem Kunststoff und / oder aus einem Metall besteht und sich auch zylinderförmig ausbilden lässt. Auch andere Formen, insbesondere rechteckige sind möglich. Es sei angeführt, dass an der Unterseite des Gehäuses vorliegend mit der Bezeichnung nahezu geschlossen eine Gehäuseunterseite bezeichnet wird, welche bis auf die Durchführungen der Anschlusskontakte geschlossen ist. Entsprechend wird mit der Bezeichnung im Wesentlichen offen, vorzugsweise eine Öffnung eines Zylinders bezeichnet.

Auch für die Abschirmvorrichtung sind unterschiedliche Gehäuseformen, insbesondere eckige möglich, solange die Abschirmvorrichtung dicht gegenüber elektromagnetischen Wellen ist. Insbesondere wenn bei der Herstellung sich der Raum zwischen dem Gehäuse und dem Faraday'sche Käfig von der Unterseite und von der Oberseite beispielsweise bei der zylinderförmigen Ausführung einfach auffüllen lässt, lassen sich die Ultraschallwandler einfach und zuverlässig herstellen.

Bisherige Lösungen gemäß dem Stand der Technik haben gezeigt, dass insbesondere bei einer asymmetrischen Signalkopplung, eine im Vergleich zu der vorliegenden Erfindung unzureichende EMV-Festigkeit gegeben ist. Mit dem vorliegenden Gitter lässt sich die EMV Festigkeit wesentlich erhöhen.

Unter dem Begriff EMV wird vorliegend die Festigkeit gegen "Elektromagnetische Wellen" verstanden. Untersuchungen haben gezeigt, dass das Wandlerelement wirkungsvoll von den elektrischen Feldern auch in einem HF-Bereich oberhalb 100 MHz abgeschirmt Ist. Insbesondere lässt sich ein kostengünstiger und kleiner Ultraschallwandler mit einer hohen EMV Festigkeit ausbilden. Ein weiterer Vorteil ist, dass das Gitter durchlässig für ein akustisches Entkopplungsmaterial ist.

In einer Weiterbildung sind die Abschirmvorrichtung und die Zwischengitterplätze und das Gehäuse mit einem akustischen Entkopplungsmaterial aufgefüllt. Bevorzugt ist, dass alle Hohlräume vollständig und insbesondere der Spalt vollständig mit dem Entkopplungsmaterial aufgefüllt sind. Vorzugsweise lassen sich als Entkopplungsmaterialien elastomer-Matrixmaterialen mit mindestens einem Füllstoff, insbesondere Gasblasen verwenden. Vorzugsweise beträgt die Shore-A Härte weniger als 25.

in einer anderen Weiterbildung weist das Wandlerelement einen kleineren Durchmesser als die Abschirmvorrichtung auf. Insbesondere ist das Wandlerelement als flaches zylinderförmiges Piezoelement ausgebildet, wobei die Oberseite und oder die Unterseite jeweils als plane Ebenen ausgebildet sind.

In einer Ausführungsform bilden der obere Rand des Gehäuses und die Oberfläche des Koppelelements und die Oberfläche des Entkopplungsmaterials eine gemeinsame plane Ebene aus. Vorzugsweise sind die einzelnen Teile an der Oberfläche flüssigkeitsdicht ausgeführt.

In einer anderen Weiterbildung ist das Gitter mittels eines Befestigungsmittels oder Insbesondere eines Klemmrings mit der Abschirmvorrichtung befestigt ist. Es versteht sich, dass sich auch andere elektrisch leitfähige und HF dichte Befestigungsmittel eignen. Vorzugsweise ist der Klemmring aus einem Metall ausgebildet. Es versteht sich, dass das Befestigungsmittel in einer anderen Ausführungsform auch Löt- oder Schweißpunkte umfasst. In einer Ausführungsform besteht auch die Abschirmvorrichtung und / oder das Gitter jeweils aus einem Metall. Bevorzugt ist, das Gitter elektrisch mit der Oberseite des Wandlerelements zu verschalten und insbesondere die zweite Elektrode mit dem Faraday'schen Käfig elektrisch zu verschalten, sodass die Oberseite des Wandlerelements und der Faraday'sche Käfig auf einem gleichen Bezugspotential geklemmt sind. Es versteht sich, dass hierzu die zweite Elektrode niederohmig mit dem Käfig verschaltet Ist. Insbesondere weist die Abschirmvorrichtung an der Unterseite einen Kontaktbereich auf, wobei die zweite Elektrode mit dem Kontaktbereich elektrisch verschaltet ist.

In einer Ausführungsform ist die erste Elektrode und oder die zweite Elektrode durch das Gehäuse vorzugsweise an der Unterseite des Gehäuses, durchgeführt.

In einer anderen Ausführungsform beträgt die Dicke der Maschenabschnitte des Gitters vorzugsweise 40µm, jedoch wenigstens 5 µm und höchstens 0,75 mm. Ferner ist es bevorzugt, dass die Maschenweite des Gitters vorzugsweise 0,4 mm beträgt, jedoch mindestens 0,1 mm und höchstens 3,0 mm aufweist. Bevorzugt ist, wenn das Gitter aus Bronze oder aus Kupfer besteht.

In einer anderen Weiterbildung beträgt der Spalt zwischen Abschirmvorrichtung und dem Gehäuse mindestens 0,5 mm und höchstens 2,0 cm.

In einer bevorzugten Ausführungsform weist das Wandlerelement eine weitere Kontaktfläche auf. Hierbei ist die zweite Elektrode mit der Kontaktfläche verschaltet ist und die Abschirmvorrichtung und das Gitter sind elektrisch isoliert von dem Wandlerelement ausgeführt. Die Abschirmvorrichtung ist mittels einer dritten Elektrode auf ein Bezugspotential geklemmt.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigt:
- Figur 1: einen Querschnittsansicht auf eine erste Ausführungsform eines Ultraschallwandlers,
- Figur 2: einen Querschnittsansicht auf eine zweite Ausführungsform eines Ultraschallwandlers.

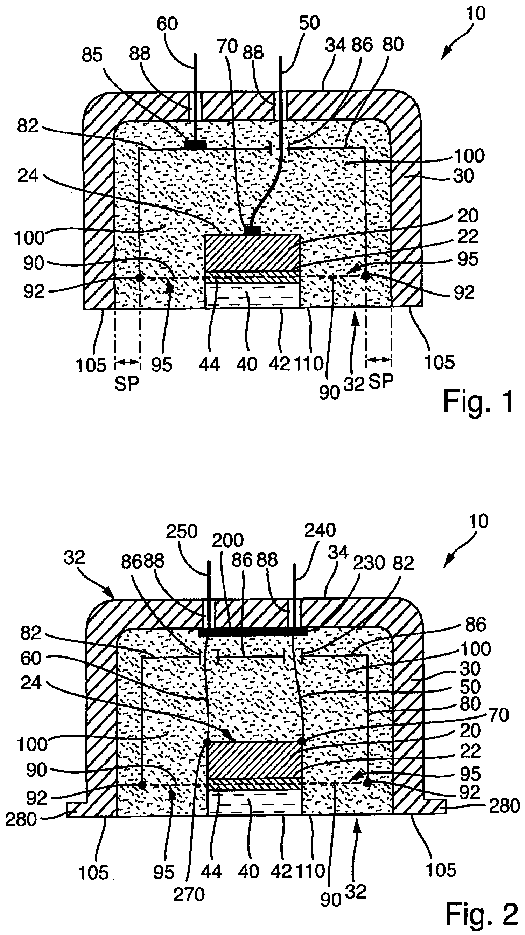

Die Abbildung der Figur 1 zeigt eine Querschnittsansicht einer ersten Ausführungsform eines Ultraschallwandlers 10 mit einem piezoelektrischen Wandlerelement 20 mit einer Oberseite 22 und einer Unterseite 24. Der Ultraschallwandlers 10 weist ein becherförmiges Gehäuse 30, mit einer Oberseite 32 und einer Unterseite 34 auf, wobei an der Oberseite 32 des Gehäuses 30 eine Öffnung ausgebildet ist. Das Gehäuse 30 Ist vorzugsweise aus Kunststoff ausgebildet. In einer nicht dargestellten alternativen Ausführungsform ist das Gehäuse 30 zylinderförmig ausgebildet. Hierbei weist das Gehäuse an der Unterseite wenigstens teilweise ein anderes Material als an der Seite des Gehäuses auf. Insbesondere wenn die Unterseite 34 offen ist, lässt sich ein Raum zwischen dem Gehäuse 30 und dem Faraday'schen Käfig einfach von der Oberseite 32 und der Unterseite 34 auffüllen.

Ferner weist der Ultraschallwandler 10 ein Koppelelement 40 mit einer Vorderseite 42 und einer Rückseite 44 auf, wobei die Rückseite 44 des Koppelelements 40 mit der Oberseite 22 des Wandlerelements 20 akustisch verkoppelt ist, um in einem Sendemodus die mittels des Wandlerelements 20 erzeugten Ultraschallwellen an die Umgebung auszukoppeln oder um in einem Empfangsmodus die aus der Umgebung von dem Koppelelement 40 empfangenen Ultraschallwellen an das Wandlerelements 20 weiterzuleiten.

Das Wandlerelement 20 und das Koppelelement 40 sind in dem Gehäuse 30 angeordnet.

Außerdem weist der Ultraschallwandler 10 eine erste Elektrode 50 und eine zweite Elektrode 60 auf, wobei die erste Elektrode 50 mit einer an der Unterseite 24 des Wandlerelements 20 ausgebildeten Kontaktfläche 70 verschaltet Ist. Das Wandlerelement 20 ist in einer becherartigen Abschirmvorrichtung 80 aus einem metallisch leitfähigen Material angeordnet, wobei die Öffnung der Abschirmvorrichtung 80 mit einem metallischen leitfähigen Gitter 90 überspannt ist. Vorliegend ist das Gitter 90 mittels einer Befestigungsvorrichtung, insbesondere eines Klemmrings 92 mit der Abschirmvorrichtung 80 befestigt. Das Gitter 90 weist eine Vielzahl von Zwischengitterplätzen 95 auf. Mit dem Begriff des Zwischengitterplatzes 95 ist die lichte Weite zwischen den Maschen des Gitters 90 bezeichnet.

Vorliegend ist die Abschirmvorrichtung 80 um die Dicke des Kopplungselements 40 in das Gehäuse 30 eingelassen. Das Gitter 90 ist elektrisch mit der Oberseite des Wandlerelements 20 verschaltet. Die Abschirmvorrichtung 80 und das Gitter 90 bilden einen Faraday'schen Käfig aus, wobei das Gitter 90 zwischen der Oberseite 22 des Wandlerelements 20 und der Rückseite 44 des Koppelelements 40 ausgebildet ist.

Ferner ist die zweite Elektrode 60 mit dem Faraday'schen Käfig, vorliegend an der Unterseite 82 der becherartigen Abschirmvorrichtung 80 an einem Kontaktbereich 85 verschaltet, sodass die Oberseite 22 des Wandlerelements 20 und der Faraday'sche Käfig auf ein Massepotential geklemmt sind. Die Abschirmvorrichtung 80 weist an der Unterseite 82 eine Durchführung 86 auf. Durch die Durchführung 86 wird die erste Elektrode 50 elektrische isolierend gegenüber der Abschirmvorrichtung 80 hindurchgeleitet. Das Gehäuse 30 weist an der Unterseite 34 für die beiden Elektroden 50 und 60 zwei Durchführungen 88 auf, d.h. die erste Elektrode 50 und die zweite Elektrode 60 sind an der Unterseite 34 durch das Gehäuse 30 hindurchgeführt.

Zwischen dem Gehäuse 30 und der Abschirmvorrichtung 80 ist ein Spalt SP ausgebildet, so dass das Gehäuse 30 von der Abschirmvorrichtung 80 akustisch entkoppelt ist. Das Wandlerelement 20 und das Koppelelement 40 weist einen kleineren Durchmesser als die Abschirmvorrichtung 80 auf. Beide Elemente 20 und 40 weisen vorzugsweise einen identischen Durchmesser auf. Sowohl die Abschirmvorrichtung 80 als auch die Zwischengitterplätze 95 sind mit einem akustischen Entkopplungsmaterial 100, insbesondere einem Elastormerschaum, aufgefüllt.

Insgesamt bilden die obere Randfläche 105 des Gehäuses 30 und die Vorderseite 42 des Koppelelements 40 und die Oberfläche des Entkopplungsmaterials 100 eine gemeinsame plane Ebene 110 aus.

In der Abbildung der Figur 2 ist eine zweite Ausführungsform eines Ultraschallwandlers 10 in einer Querschnittsansicht dargestellt. Im Folgenden werden nur die Unterschiede zu der Ausführungsform dargestellt in der Abbildung der Figur 1 erläutert. Das Wandlerelement 20 weist einen zweite Kontaktfläche 270 auf. Die zweite Elektrode 70 ist mit der zweiten Kontaktfläche 270 verschaltet. Des Weiteren weist die Abschirmvorrichtung 80 an der Unterseite 82 eine weitere Durchführung 86 auf.

Durch die weitere Durchführung 86 wird die zweite Elektrode 60 elektrisch gegenüber der Abschirmvorrichtung 80 Isolierend hindurchgeleitet. Beide Elektroden 50 und 60, welche vorzugsweise einen flexiblen Draht umfassen, enden auf einer Platine 230. Die Platine 230 ist an der Innenseite des Gehäuses 30 zwischen der Abschirmvorrichtung 80 und dem Gehäuseboden 200 ausgebildet. Die Platine 230 umfasst einen ersten Kontaktstift 240 und einen zweiten Kontaktstift 250, wobei die beiden Kontaktstifte 240 und 250 durch die beiden Durchführungen 88 an dem Gehäuse 30 hindurchgeführt sind. Das Gehäuse 30 weist ein mit der Randfläche 105 verbundenen Absatz 280 auf.

Während In der ersten Ausführungsform, dargestellt in der Figur 1, die zweiten Elektrode 60 mittels des Gitters 90 an das Wandlerelement 20 angeschlossen ist und zu einer asymmetrische Signalauskopplung führt, indem der Anschluss an den Faraday'schen Käfig auf ein Referenzpotential geklemmt ist, ist in der vorliegenden Ausführungsform der Figur 2 die zweite Elektrode 60 unmittelbar mit dem Wandlerelement 20 in der Ausführungsform, dargestellt in der Abbildung der Figur 2, verschaltet. Indem keine der beiden Elektroden 50 und 60 auf ein Massepotential geklemmt ist, lässt sich nunmehr eine symmetrische Signalauskopplung durchführen. Sofern das Gitter 90 nicht elektrisch mit dem Wandlerelement 20 verschaltet ist, lässt sich das Gitter 90 auf ein Bezugspotential klemmen. Ein zwischen der ersten Elektrode und der zweiten Elektrode anliegendes Wechselsignal wäre frei von einen Bezugspotential.

## Patentansprüche

1. Ultraschallwandler (10) aufweisend,
ein piezoelektrisches Wandlerelement (20) mit einer Oberseite (22) und einer Unterseite (24), und
ein becherförmiges, mit einer Oberseite (32) und einer nahezu geschlossenen Unterseite (34), oder zylinderförmiges Gehäuse (30) mit einer offenen Unterseite (34), wobei an der Oberseite (32) eine Öffnung ausgebildet ist, und
ein Koppelelement (40) mit einer Vorderseite (42) und einer Rückseite (44), wobei die Rückseite (44) des Koppelelements (40) mit der Oberseite (22) des Wandlerelements (20) akustisch verkoppelt ist, um in einem Sendemodus die mittels des Wandlerelements (20) erzeugten Ultraschallwellen an die Umgebung auszukoppeln oder um in einem Empfangsmodus die aus der Umgebung von dem Koppelelement (40) empfangenen Ultraschallwellen an das Wandlerelements (20) weiterzuleiten, und wobei das Wandlerelement (20) und das Koppelelement (40) in dem Gehäuse (30) angeordnet sind, und
eine erste Elektrode und eine zweite Elektrode, wobei die erste Elektrode mit einer an der Unterseite (24) des Wandlerelements (20) ausgebildeten Kontaktfläche (70) verschaltet ist,
das Wandlerelement (20) in einer becherartigen Abschirmvorrichtung (80) aus einem metallisch leitfähigen Material angeordnet und die Öffnung der Abschirmvorrichtung (80) mit einem metallischen leitfähigen Gitter (90) überspannt ist, so dass die Abschirmvorrichtung (80) und das Gitter (90) einen Faraday'schen Käfig ausbilden, und zwischen dem Gehäuse (30) und der Abschirmvorrichtung (80) ein Spalt (SP) ausgebildet und das Gehäuse (30) von der Abschirmvorrichtung (80) akustisch entkoppelt ist
**dadurch gekennzeichnet, dass**
das Gitter (90) zwischen der Oberseite (22) des Wandlerelements (20) und der Rückseite (44) des Koppelelements (40) ausgebildet ist und das Wandlerelement (20) von der Unterseite (34) beabstandet ist und zwischen dem Wandlerelement (20) und der Unterseite (34) ein akustisches Entkopplungsmaterial (100) angeordnet ist,
und das Koppelelement (40) einen Durchmesser kleiner als die Abschirmvorrichtung (80) aufweist, sodass zwischen dem Gehäuse (30) und dem Koppelelement (40) akustisches Entkopplungsmaterial (100) angeordnet ist.

2. Ultraschallwandler (10) nach Anspruch 1, **dadurch gekennzeichnet, dass** die Abschirmvorrichtung und die Zwischengitterplätze und das Gehäuse mit dem akustischem Entkopplungsmaterial (100) aufgefüllt sind.

3. Ultraschallwandler (10) nach Anspruch 1 oder Anspruch 2, **dadurch gekennzeichnet, dass** das Wandlerelement einen kleineren Durchmesser als die Abschirmvorrichtung aufweist.

4. Ultraschallwandler (10) nach einen oder mehreren der vorangegangenen Ansprüche, **dadurch gekennzeichnet, dass** der obere Rand des Gehäuses und die Oberfläche des Koppelelements und die Oberfläche des Entkopplungsmaterials eine gemeinsame plane Ebene ausbilden.

5. Ultraschallwandler (10) nach einen oder mehreren der vorangegangenen Ansprüche, **dadurch gekennzeichnet, dass** das Gitter mittels eines Befestigungsmittels oder eines Klemmrings mit der Abschirmvorrichtung befestigt ist.

6. Ultraschallwandler (10) nach einen oder mehreren der vorangegangenen Ansprüche, **dadurch gekennzeichnet, dass** die Abschirmvorrichtung und / oder das Gitter jeweils aus einem Metall besteht.

7. Ultraschallwandler (10) nach einen oder mehreren der vorangegangenen Ansprüche, **dadurch gekennzeichnet, dass** das Gitter elektrisch mit der Oberseite des Wandlerelements verschaltet ist und die zweite Elektrode mit dem Faraday'schen Käfig verschaltet ist, sodass die Oberseite des Wandlerelements und der Faraday'sche Käfig auf einem gleichen Bezugspotential geklemmt sind.

8. Ultraschallwandler (10) nach einen oder mehreren der vorangegangenen Ansprüche, **dadurch gekennzeichnet, dass** die erste Elektrode und oder die zweite Elektrode durch das Gehäuse durchgeführt ist.

9. Ultraschallwandler (10) nach einen oder mehreren der vorangegangenen Ansprüche, **dadurch gekennzeichnet, dass** die Abschirmvorrichtung (80) an der Unterseite einen Kontaktbereich (85) aufweist und die zweite Elektrode (60) mit dem Kontaktbereich (85) elektrisch verschaltet ist.

10. Ultraschallwandler (10) nach einen oder mehreren der vorangegangenen Ansprüche, **dadurch gekennzeichnet, dass** die Dicke der Maschenabschnitte des Gitters (90) wenigstens 5 µm und höchstens 0,75 mm beträgt.

11. Ultraschallwandler (10) nach einen oder mehreren der vorangegangenen Ansprüche, **dadurch gekennzeichnet, dass** die Maschenweite des Gitters (90) mindestens 0,1 mm und höchstens 3,0 mm beträgt.

12. Ultraschallwandler (10) nach einen oder mehreren der vorangegangenen Ansprüche, **dadurch gekennzeichnet, dass** der Spalt (SP) zwischen Abschirmvorrichtung (80) und dem Gehäuse (30) mindestens 0,5 mm beträgt.

13. Ultraschallwandler (10) nach einen oder mehreren der vorangegangenen Ansprüche, **dadurch gekennzeichnet, dass** das Gitter (90) aus Bronze oder aus Kupfer besteht.

14. Ultraschallwandler (10) nach einen oder mehreren der vorangegangenen Ansprüche, **dadurch gekennzeichnet, dass** das Wandlerelement (20) eine weitere Kontaktfläche (270) aufweist und die zweite Elektrode (60) mit der Kontaktfläche (270) verschaltet ist und die Abschirmvorrichtung (80) und das Gitter (90) elektrisch isoliert von dem Wandlerelement (20) ist und die Abschirmvorrichtung (80) mittels einer dritten Elektrode auf ein Bezugspotential geklemmt ist.

## Claims

1. Ultrasound converter (10) comprising
a piezoelectric converter element (20) with an upper side (22) and a lower side (24),
a cup-shaped housing (30) with an upper side (32) and almost closed lower side (34) or cylindrical housing (30) with an open underside (34), wherein an opening is formed at the upper side (32),
a coupling element (40) with a front side (42) and a rear side (44), wherein the rear side (44) of the coupling element (40) is acoustically coupled with the upper side (22) of the converter element (20) in order in a transmitting mode to decouple out to the environment the ultrasonic waves generated by means of the converter element (20) or in order in a receiving mode to pass on to the converter element (20) the ultrasonic waves received from the environment by the coupling element (40), wherein the converter element (20) and the coupling element (40) are arranged in the housing (30), and
a first electrode and a second electrode, wherein the first electrode is connected with a contact surface (70) formed at the lower side (24) of the converter element (20),
the converter element (20) is arranged in a cup-like screen device (80) consisting of a metallic conductive material and the opening of the screening device (80) is bridged over by a metallic conductive grid (90) so that the screening device (80) and the grid (90) form a Faraday cage and a gap (SP) is formed between the housing (30) and the screening device (80) and the housing (30) is acoustically decoupled from the screening device (80),
**characterised in that**
the grid (90) is formed between the upper side (22) of the converter element (20) and the rear side (44) of the coupling element (40) and the converter element (20) is spaced from the lower side (34) and an acoustic decoupling material (100) is arranged between the converter element (20) and the lower side (34) and
the coupling element (40) has a diameter smaller than the screening device (80) so that acoustic decoupling material (100) is arranged between the housing (30) and the coupling element (40).

2. Ultrasound converter (10) according to claim 1, **characterised in that** the screening device and the grid interstices and the housing are filled with the acoustic decoupling material (100).

3. Ultrasound converter (10) according to claim 1 or claim 2, **characterised in that** the converter element has a smaller diameter than the screening device.

4. Ultrasound converter (10) according to one or more of the preceding claims, **characterised in that** the upper edge of the housing and the surface of the coupling element and the surface of the decoupling material form a common planar plane.

5. Ultrasound converter (10) according to one or more of the preceding claims, **characterised in that** the grid is attached to the screening device by way of fastening means or a clamping ring.

6. Ultrasound converter (10) according to one or more of the preceding claims, **characterised in that** the screening device and/or the grid respectively consists or consist of a metal.

7. Ultrasound converter (10) according to one or more of the preceding claims, **characterised in that** the grid is electrically connected with the upper side of the converter element and the second electrode is connected with the Faraday cage so that the upper side of the converter element and the Faraday cage are coupled to the same reference potential.

8. Ultrasound converter (10) according to one or more of the preceding claims, **characterised in that** the first electrode and/or the second electrode is or are led through the housing.

9. Ultrasound converter (10) according to one or more of the preceding claims, **characterised in that** the screening device (80) has a contact region (85) at the lower side and the second electrode (60) is electrically connected with the contact region (85).

10. Ultrasound converter (10) according to one or more of the preceding claims, **characterised in that** the thickness of the mesh sections of the grid (90) is at least 5 microns and at most 0.75 millimetres.

11. Ultrasound converter (10) according to one or more of the preceding claims, **characterised in that** the mesh width of the grid (90) is at least 0.1 millimetres and at most 3.0 millimetres.

12. Ultrasound converter (10) according to one or more of the preceding claims, **characterised in that** the gap (SP) between the screening device (80) and the housing (30) is at least 0.5 millimetres.

13. Ultrasound converter (10) according to one or more of the preceding claims, **characterised in that** the grid (90) consists of bronze or of copper.

14. Ultrasound converter (10) according to one or more of the preceding claims, **characterised in that** the converter element (20) has a further contact surface (270) and the second electrode (60) is connected with the contact surface (270) and the screening device (80) and the grid (90) are electrically insulated from the converter element (20) and the screening device (80) is coupled by a third electrode to a reference potential.

## Revendications

1. Convertisseur d'ultrasons (10), présentant
un élément de convertisseur piézoélectrique (20) avec un côté supérieur (22) et un côté inférieur (24), et
un boîtier (30) en forme de coupe, avec un coté supérieur (32) et un côté inférieur presque fermé (34), ou en forme de cylindre avec un côté inférieur ouvert (34), dans lequel une ouverture est formée sur le côté supérieur (32), et
un élément de couplage (40) avec un côté avant (42) et un côté arrière (44), dans lequel le côté arrière (44) de l'élément de couplage (40) est acoustiquement couplé au côté supérieur (22) de l'élément de convertisseur (20), afin d'émettre dans l'environnement dans un mode d'émission les ondes ultrasonores produites au moyen de l'élément de convertisseur (20) ou pour retransmettre à l'élément de convertisseur (20) dans un mode de réception les ondes ultrasonores reçues de l'environnement par l'élément de couplage (40) et dans lequel l'élément de convertisseur (20) et l'élément de couplage (40) sont disposés dans le boîtier (30), et
une première électrode et une deuxième électrode, la première électrode étant connectée à une face de contact (70) formée sur le côté inférieur (24) de l'élément de convertisseur (20),
l'élément de convertisseur (20) est disposé dans un dispositif de protection de type coupe (80) en un matériau métallique conducteur et l'ouverture du dispositif de protection (80) est recouverte d'une grille métallique conductrice (90), de telle manière que le dispositif de protection (80) et la grille (90) forment une cage de Faraday et une fente (SP) est formée entre le boîtier (30) et le dispositif de protection (80) et le boîtier (30) est acoustiquement découplé du dispositif de protection (80),
**caractérisé en ce que**
la grille (90) est formée entre le côté supérieur (22) de l'élément de convertisseur (20) et le côté arrière (44) de l'élément de couplage (40) et l'élément de convertisseur (20) est espacé du côté inférieur (34) et un matériau de découplage acoustique (100) est disposé entre l'élément de convertisseur (20) et le côté inférieur (34), et
l'élément de couplage (40) présente un plus petit diamètre que le dispositif de protection (80), de telle manière qu'un matériau de découplage acoustique (100) soit disposé entre le boîtier (30) et l'élément de couplage (40).

2. Convertisseur d'ultrasons (10) selon la revendication 1, **caractérisé en ce que** le dispositif de protection et les interstices de la grille et le boîtier sont remplis avec le matériau de découplage acoustique (100).

3. Convertisseur d'ultrasons (10) selon la revendication 1 ou la revendication 2, **caractérisé en ce que** l'élément de convertisseur présente un plus petit diamètre que le dispositif de protection.

4. Convertisseur d'ultrasons (10) selon une ou plusieurs des revendications précédentes, **caractérisé en ce que** le bord supérieur du boîtier et la surface de l'élément de couplage et la surface du matériau de découplage forment un plan commun.

5. Convertisseur d'ultrasons (10) selon une ou plusieurs des revendications précédentes, **caractérisé en ce que** la grille est fixée au dispositif de protection au moyen d'un moyen de fixation ou d'un anneau de serrage.

6. Convertisseur d'ultrasons (10) selon une ou plusieurs des revendications précédentes, **caractérisé en ce que** le dispositif de protection et/ou la grille se compose respectivement d'un métal.

7. Convertisseur d'ultrasons (10) selon une ou plusieurs des revendications précédentes, **caractérisé en ce que** la grille est connectée électriquement au côté supérieur de l'élément de convertisseur et la deuxième électrode est connectée à la cage de Faraday, de telle manière que le côté supérieur de l'élément de convertisseur et la cage de Faraday soient raccordés à un même potentiel de référence.

8. Convertisseur d'ultrasons (10) selon une ou plusieurs des revendications précédentes, **caractérisé en ce que** la première électrode et/ou la deuxième électrode est menée à travers le boîtier.

9. Convertisseur d'ultrasons (10) selon une ou plusieurs des revendications précédentes, **caractérisé en ce que** le dispositif de protection (80) présente une zone de contact (85) sur le côté inférieur et la deuxième électrode (60) est connectée électriquement à la zone de contact (85).

10. Convertisseur d'ultrasons (10) selon une ou plusieurs des revendications précédentes, **caractérisé en ce que** l'épaisseur des parties de maille de la grille (90) vaut au moins 5 µm et au plus 0,75 mm.

11. Convertisseur d'ultrasons (10) selon une ou plusieurs des revendications précédentes, **caractérisé en ce que** la largeur des mailles de la grille (90) vaut au moins 0,1 mm et au plus 3,0 mm.

12. Convertisseur d'ultrasons (10) selon une ou plusieurs des revendications précédentes, **caractérisé en ce que** la fente (SP) entre le dispositif de protection (80) et le boîtier (30) vaut au moins 0,5 mm.

13. Convertisseur d'ultrasons (10) selon une ou plusieurs des revendications précédentes, **caractérisé en ce que** la grille (90) se compose de bronze ou de cuivre.

14. Convertisseur d'ultrasons (10) selon une ou plusieurs des revendications précédentes, **caractérisé en ce que** l'élément de convertisseur (20) présente une autre face de contact (270) et la deuxième électrode (60) est connectée à la face de contact (270) et le dispositif de protection (80) et la grille (90) sont électriquement isolés de l'élément de convertisseur (20) et le dispositif de protection (80) est raccordé à un potentiel de référence au moyen d'une troisième électrode.
